# EUROPÄISCHE PATENTSCHRIFT

(11) **EP 0 516 943 B1**
(45) Veröffentlichungstag und Bekanntmachung des Hinweises auf die Patenterteilung: **18.01.1995**
(21) Anmeldenummer: 92106070.3
(22) Anmeldetag: 08.04.1992
(51) Int. Cl.: H01R 13/71

(54) **Kontaktsatz, insbesondere für Kontaktzonen besitzende Karten**
Contact set especially for cards having contact areas
Banc de contacts spécialement pour des plaquettes ayant des régions de contacts

(30) Priorität: 04.06.1991 DE 4118312
(43) Veröffentlichungstag der Anmeldung: 09.12.1992
(73) Patentinhaber: AMPHENOL-TUCHEL ELECTRONICS GmbH, D-74064 Heilbronn (DE)
(72) Erfinder: Schuder, Bernd, D-74193 Schwaigern (DE); Bleier, Robert, D-74199 Untergruppenbach (DE)
(74) Vertreter: Wagner, Karl H., Dipl.-Ing.

(56) Entgegenhaltungen:
- EP-A- 0 384 580
- DE-A- 4 111 049
- GB-A- 2 228 633
- US-A- 4 850 888
- US-A- 4 971 568

## Beschreibung

Die Erfindung bezieht sich auf einen Kontaktsatz gemäß Anspruch 1.

Der Kontaktsatz ist vorzugsweise von einer Bauart, bei der die SIM-Karte (der Einfachheit halber wird im folgenden stets von einer SIM-Karte gesprochen, obwohl die Erfindung auch bei anderen Kontaktzonen tragenden Karten verwendbar ist) positionsrichtig auf die Kontaktelemente des Kontaktsatzes gelegt und durch ein Bauteil, beispielsweise einen Deckel gegen diese Kontakte gedrückt wird. Die Karte wird also zum Zwecke der Kontaktierung mit den Kontaktelementen des Kontaktsatzes nicht eingeschoben.

Die vorliegende Erfindung betrifft insbesondere einen Kontaktsatz, der einen Isolierkörper mit Kontaktkammern aufweist, in die eine Anzahl von Kontaktelementen in der Form von Lesekontakten eingesetzt sind, die von identischer Bauart sind. Im allgemeinen wird einer der Lesekontakte als Massekontakt verwendet und so bezeichnet.

Bei Verwendung des Kontaktsatzes ist es oftmals wichtig, an eine mit dem Kontaktsatz zusammenarbeitende Schaltung Information darüber zu liefern, ob und wann eine Kontaktgabe der Lesekontakte mit den Kontaktzonen auf der SIM-Karte erfolgt ist. Bei üblichen Chipkarten, bei denen die Eingabe der Chipkarte häufig durch Einschieben erfolgt, werden dazu sogenannte Endlagenschalter verwendet, die durch die Karte selbst betätigbar sind.

Die vorliegende Erfindung hat sich die Aufgabe gestellt, einen Karten-Anwesensheitsschalter für einen Kontaktsatz vorzusehen, ohne dabei eine Vergrößerung der Außenmaße des Kontaktsatzes in Kauf nehmen zu müssen. Die vorliegende Erfindung bezweckt insbesondere Maßnahmen anzugeben, wie ein bereits vorhandener Kontaktsatz ohne Vergrößerung seiner Außenmaße mit einem Karten-Anwesenheitsschalter ausgerüstet werden kann.

Die Erfindung bezieht sich speziell auf einen Kontaktsatz mit Schalter für CCAD (Chip-Card Acceptor Device).

Ferner bezweckt die Erfindung, den Karten-Anwesenheitsschalter derart auszubilden, daß dieser eine sogenannte Nacheilung aufweist, d. h. daß, erst nachdem die Lesekontakte mit den SIM -Kartenkontaktzonen in Berührung stehen, soll der Karten-Anwesenheitsschalter betätigt werden.

Die vorliegende Erfindung vermeidet dabei einen zusätzlichen Teilungsschritt bzw. ein weiteres Kontaktpaar und sieht vor, daß einem der Lesekontakte, und zwar vorzugsweise einem an Masse liegenden Lesekontakt (dem sogenannten Massekontakt), ein Zusatzkontakt zugeordnet ist. Massekontakt und Zusatzkontakt bilden dann den Karten-Anwesenheitsschalter. Vorzugsweise ist dieser Karten-Anwesenheitsschalter als sogenannter Schließer ausgebildet.

Gemäß einer bevorzugten Ausgestaltung der Erfindung ist der Zusatzkontakt unter dem Masse- oder GND (Grounding) -Kontakt angeordnet. Zum einen durch eine in der Höhe (gegenüber den Lesekontakten) zurückgesetzte Anordnung des Massekontaktes und zum anderen durch einen Spalt zwischen Massekontakt und Zusatz- oder Schaltkontakt wird eine sichere Nacheilung gegenüber den Lesekontakten erreicht.

Vorzugsweise wird der Schalt- oder Zusatzkontakt in die Kontaktkammer des Massekontaktes mit Zusatzhaltedom eingerastet.

Gemäß einer bevorzugten Ausgestaltung der Erfindung ist der Zusatzkontakt und/oder der Massekontakt mit einer Sicke ausgestattet. Vorzugsweise werden für den Zusatzkontakt und den Massekontakt sich kreuzende Sicken verwendet, so daß sich für sicheres Schalten ein Punktkontakt ergibt.

Der erfindungsgemäße Kontaktsatz erfordert keinen zusätzlichen Raum und kann bei allen Kontaktsätzen eingesetzt werden, die eine genügende Bauhöhe aufweisen.

Bevorzugte Ausgestaltungen der Erfindung ergeben sich aus der Beschreibung von Ausführungsbeispielen anhand der Zeichnung; in der Zeichnung zeigt:
- Fig. 1: schematisch in perspektivischer Darstellung einen erfindungsgemäßen Kontaktsatz;
- Fig. 2: in perspektivischer Darstellung einen Lesekontakt für den erfindungsgemäßen Kontaktsatz;
- Fig. 3: eine perspektivische Darstellung des Schalt- oder Zusatzkontakts;
- Fig. 4: eine Einzelheit der Fig. 3;
- Fig. 5: eine Ansicht des Kontaktsatzes der Fig. 1 von unten;
- Fig. 6: einen Schnitt längs Linie G-H in Fig. 7;
- Fig. 7: eine Draufsicht auf den Kontaktsatz der Fig. 1;
- Fig. 8: eine zehnfach vergrößerte Darstellung der Einzelheit X in Fig. 6 mit montierten Kontakten;
- Fig. 9: einen Schnitt längs Linie C-D in Fig. 8;
- Fig.10: einen schematischen Schnitt durch die Kontaktenden des Massekontaktes und des Zusatzkontaktes, wobei die beiden sich kreuzenden Sicken dargestellt sind.

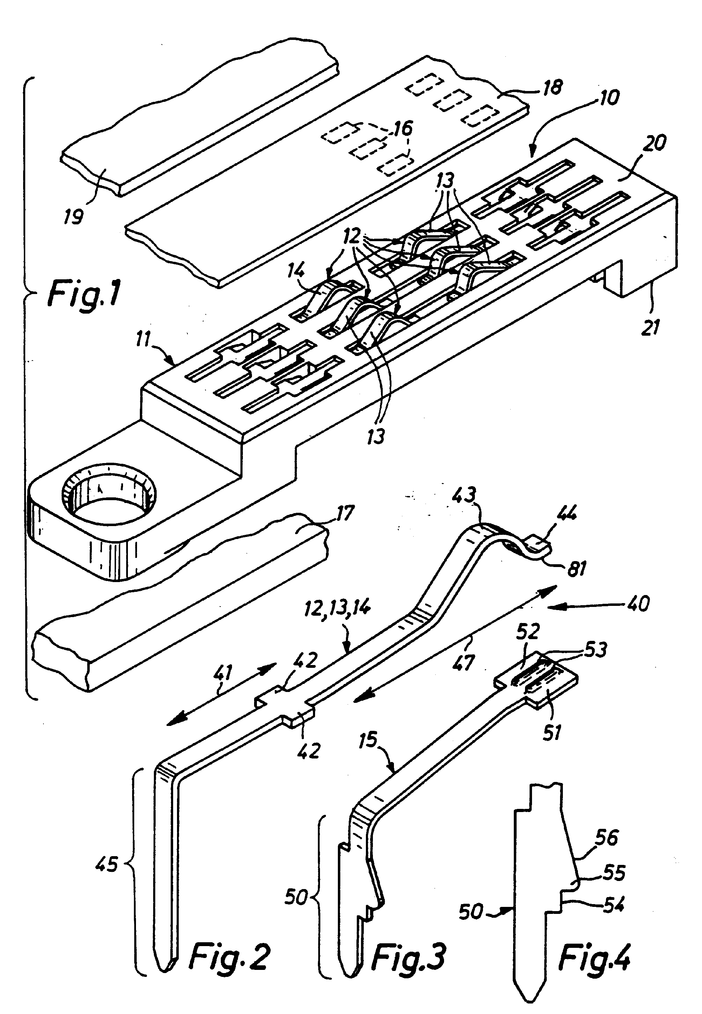

Anhand der Fig. 1 bis 10 wird ein Ausführungsbeispiel eines Kontaktsatzes 10 erläutert, der einen Isolierkörper 11 sowie Kontaktelemente 12 aufweist. Die Kontaktelemente 12 sind vorzugsweise identisch ausgebildet.

Der Kontaktsatz 10 kann auf der Leiterplatte eines Geräts 17, beispielsweise angeschraubt sein. Seine Unterseite 21 liegt dann auf der Leiterplatte des Geräts an, während seine Oberseite 20 als Auflage für eine Kontaktzonen oder sogenannten Kartenkontakte 16 aufweisende Karte 18 dient. Vorzugsweise ist die Karte 18 eine SIM-Karte und demzufolge wird im folgenden der Einfachheit halber nur der Ausdruck SIM-Karte verwendet.

Beim positionsrichtigen Auflegen der SIM-Karte 18 kommen die an der Unterseite der Karte 18 vorhandenen Kartenkontakte 16 mit den über die Oberseite 20 hinausragenden Kontaktelementen 12 in Kontaktberührung. Ein Deckel 19 dient dabei vorzugsweise zum Andrücken der SIM-Karte 19 an die Oberseite 20.

### Kontaktelemente

Die in Fig. 1 gezeigten Kontaktelemente 12 werden in der Praxis häufig unterteilt in sogenannte Lesekontaktelemente (Lesekontakte) 13 und ein sogenanntes Massekontaktelement (Massekontakt) 14. Üblicherweise ist bei der Anordnung gemäß Fig. 1 das links oben gelegene Kontaktelement 12 ein sogenanntes Massekontaktelement 14, während die fünf verbleibenden Kontaktelemente 12 Lesekontakte 13 sind.

Die vorliegende Erfindung bezieht sich insbesondere auf die Ausbildung eines Karten-Anwesenheitsschalters (im folgenden KA-Schalter) 40 im Isolierkörper 11. Dieser KA-Schalter 40 verwendet einen der Lesekontakte 12, und zwar vorzugsweise den als Massekontakt 14 verwendeten Lesekontakt und sieht zusätzlich einen Schalt- oder Zusatzkontakt 15 - Fig. 3 und 8 - vor, um den KA-Schalter 40 zu bilden.

Fig. 2 zeigt das Kontaktelement 12, welches die identischen Lesekontakte 13 und den ebenfalls damit identischen Massekontakt 14 bildet. Das Kontaktelement 12 ist aus einem Metallblech gestanzt und gebogen und besitzt eine Rastzone 41 mit Rastansätzen 42, eine Kontaktzone 47 mit einer Kontaktkuppe 43 und einer daran anschließenden Anlagefläche 44 sowie einer Anschlußzone 45.

Der in Fig. 3 gezeigte Zusatzkontakt 15 weist eine Anschluß- und Rastzone 50 sowie eine Kontaktzone 51 mit einer verbreiterten Kontaktfläche 52 sowie einer axial darin ausgebildeten Längssicke 53 auf. Die Fig. 4 zeigt die Anschluß- und Rastzone 50 im einzelnen und man erkennt einen Vorsprung 54 sowie oberhalb zum Vorsprung 54 eine Rastnase 55 mit daran anschließender Schräge 56.

### Isolierkörper 11

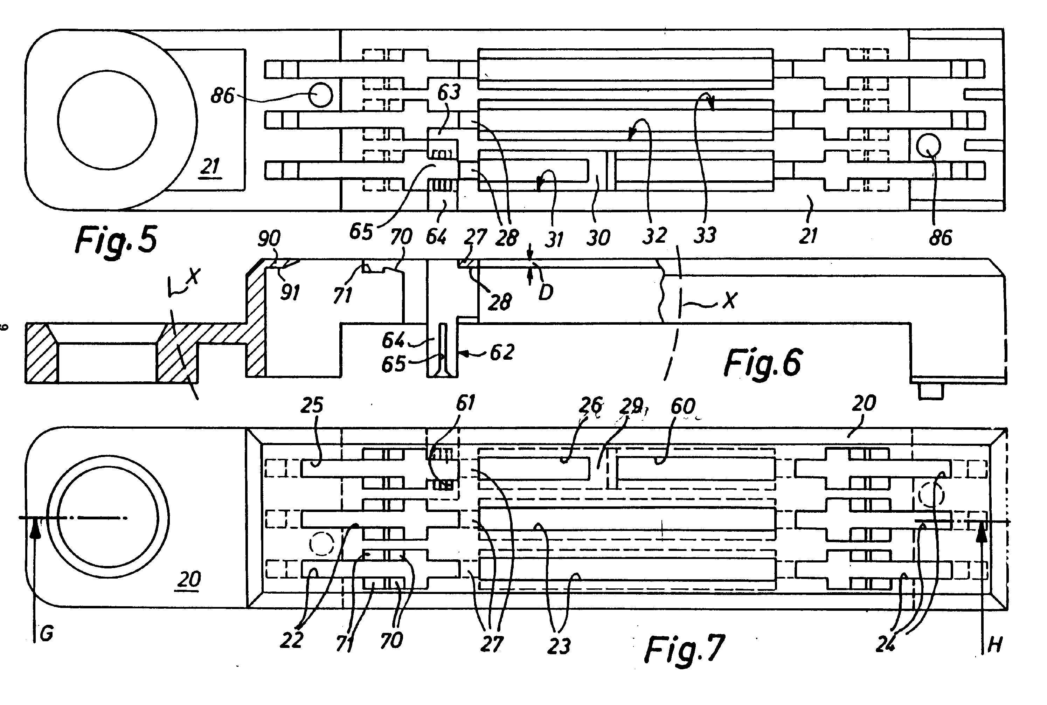

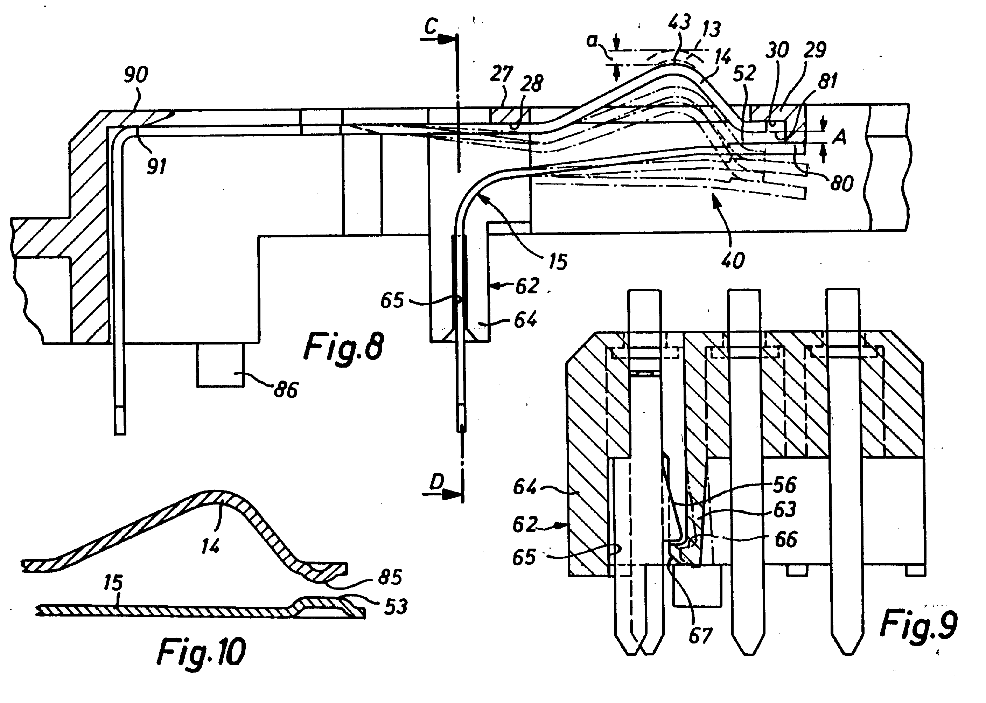

Bevor auf den KA-Schalter 40 im einzelnen eingegangen wird, sei anhand der Fig. 5 bis 7 der Isolierkörper 11 näher beschrieben. Blickt man zunächst auf die in Fig. 7 gezeigte Oberseite 20, so erkennt man im unteren Bereich drei hintereinander angeordnete Schlitze 22, 23 und 24, im mittleren Bereich gleichartige Schlitze 22, 23 und 24 und im oberen Bereich vier Schlitze, und zwar den Schlitz 25, den Schlitz 26, einen Schlitz 60 und schließlich den mit den beiden schon erwähnten Schlitzen 24 identischen Schlitz 24. Schlitz 25 ist gegenüber den Schlitzen 22 um eine zusätzliche Ausnehmung 61 modifiziert, die den Blick zu einem Haltedom 62 (vgl. Fig. 6 und 8) für den Zusatzkontakt 15 freigibt. Die beiden Schlitze 26 und 60 entsprechen den Schlitzen 23, bilden aber einen Steg 29, der - wie in Fig. 5 gezeigt - an seiner Unterseite eine Anschlagfläche 30 für den Massekontakt 14 bildet.

Betrachtet man nunmehr die Unterseite gemäß Fig. 5, so erkennt man, drei parallele, in Längsrichtung verlaufende Kammern 31, 32 und 33. In diese Kammern werden die Kontaktelemente 12 in der in Fig. 2 gezeigten Art eingesetzt, und am Isolierkörper 11 verrastet. Die Verrastung erfolgt dadurch, daß man die Kontaktelemente 12 nach links verschiebt, so daß die Rastansätze 42 über Schrägen 70 laufen und in Vertiefungen 71 einrasten. Kontaktelemente 12, d. h. die Lesekontakte 13 wie auch der Massekontakt 14, sind in dieser Weise im Isolierkörper 11 verrastet.

Erfindungsgemäß ist der Zusatzkontakt 15 in dem Haltedom 62 verrastet. Der Haltedom 62 ist vorzugsweise einstückig mit dem Isolierkörper 11 ausgebildet und besitzt zwei Schenkel 63 und 64 (Fig. 5). Zwischen den beiden Schenkeln 63 und 64 ist ein Spalt 65 vorgesehen. Insbesondere in Fig. 6 erkennt man, daß am Schenkel 64 ein nach unten offener Schlitz 65 ausgebildet ist, welcher zur Führung der Anschluß- und Rastzone 50 des Zusatzkontaktes 15 dient. Der andere Schenkel 63 ist, was man besonders gut in Fig. 9 erkennt, elastisch nachgiebig angeordnet und bildet eine Anlagefläche 66. Der Massekontakt 14 kann also mit seiner Anschluß- und Rastzone 50 dank der elastischen Nachgiebigkeit des Schenkels 63 und unter Zusammenarbeit der Schräge 56 des Zusatzkontakts 50 und der Schrägfläche 67, ausgebildet am Schenkel 64, in seine Halterungsposition gelangen, wo die Anlagefläche 66 in Zusammenarbeit mit der abfallenden Flanke der Schräge 56 ein Herausfallen des Zusatzkontaktes 50 aus dem Haltedom 62 unmöglich macht. Vorzugsweise ist auch in dem Schenkel 63 eine Führungsnut für die Anschluß- und Rastzone 50 vorgesehen, die aber nach unten hin geschlossen ist.

### KA-Kontakt

Während die sogenannten Lesekontakte 13 durch Anlage an den Anschlagflächen 28 derart vorgespannt sind, daß ihre Kontaktkuppen 43 über die Oberseite 20 hinausragen, ist das als Massekontakt 14 benutzte Kontaktelement 12 zwar auch vorgespannt, aber nicht durch Anlage an einer Anschlagfläche 28, sondern durch Anlage an der durch Steg 29 gebildeten Anschlagfläche 30. Dadurch ragt die Kuppe 43 des Massekontaktes 14 um einen "kleineren" Abstand d. h. weniger über die Oberseite 20 hinaus, als dies für die Lesekontakte 13 gilt. Dieser Abstand "a" trägt zu der gewünschten Nacheilung hinsichtlich der Betätigung des KA-Schalters 40 bei. Insbesondere in Fig. 8 erkennt man, daß der Steg 29 eine Anlagefläche 80 für die Kontaktfläche 52 des Zusatzkontaktes 15 bildet. Zwischen der Anlagefläche 80 und der Kontaktunterseite 81 des Massekontakts 14 ist ein Abstand "A" vorgesehen. Erst nach Durchlaufen des Abstands "A" trifft die Kontaktfläche 81 auf die Kontaktfläche 52 auf. Insgesamt wird also der KA-Schalter 40 mit einer Nacheilung von "a" plus "A" betätigt.

Von großer Wichtigkeit ist noch, daß erfindungsgemäß die durch die Vertiefung 71 gebildete Auflagefläche und die Schräge 70 für den Massekontakt 14 in dessen Kammer tiefer gelegt sind, als dies für die Kontaktkammern der "normalen" Lesekontakte der Fall ist. Auch der Stegteil 27 und der Gehäuseabschnitt 90 (vgl. Fig. 6) haben für die Kammer des Massekontakts eine größere Dicke als die Dicke D wie sie für einen "normalen" Lesekontakt vorgesehen ist. Auf diese Weise liegen die Auflageflächen 91 und 28 (Fig. 6) für den Massekontakt tiefer als dies in Fig. 6 für einen Lesekontakt gezeigt ist. Dies ist für die gewünschte Nacheilung von Vorteil.

Fig. 10 veranschaulicht die bereits erwähnte Sicke 53 und ferner eine diese kreuzende Sicke 85 am Massekontakt 14.

Von der Unterseite 21 des Isolierkörpers ragt zum einen der Haltedom 62 nach unten. Zum anderen ragen noch zwei Führungsstifte 86 von der anderen Seite 21 weg.

## Patentansprüche

1. Kontaktsatz für eine Kontaktzonen aufweisende Karte, insbesondere eine SIM-Karte, bei dem folgendes vorgesehen ist:
ein eine Oberseite (20) und eine Unterseite (21) aufweisender Isolierkörper (11),
mehrere im Isolierkörper ausgebildete Kontaktkammern, in die Kontaktkammern eingesetzte Lese- oder Massekontakte (12, 13, 14), die über die Oberseite (20) des Isolierkörpers (11) mit ihren Kontaktkuppen (43) herausragen, und
mindestens ein Zusatz- oder Schaltkontakt (15), angeordnet in mindestens einer der Kontaktkammern unterhalb eines der Lesekontakte zur Bildung eines Karten-Anwesenheitsschalters (40) mit diesem.

2. Kontaktsatz nach Anspruch 1, dadurch gekennzeichnet, daß der mit dem Zusatzkontakt zusammenarbeitende Lesekontakt ein Massekontakt ist.

3. Kontaktsatz nach Anspruch 1 oder 2, dadurch gekennzeichnet, daß der Karten-Anwesenheitsschalter (40) als nacheilender Schalter ausgebildet ist, d. h., er wird erst dann betätigt, nachdem die Kontaktzonen der Karte durch die Lesekontakte und den oder die Massekontakte kontaktiert sind.

4. Kontaktsatz nach einem der vorhergehenden Ansprüche dadurch gekennzeichnet, daß die Lesekontakte und der Massekontakt identisch ausgebildet sind.

5. Kontaktsatz nach einem oder mehreren der vorhergehenden Ansprüche, dadurch gekennzeichnet, daß die Lese- und Massekontakte jeweils vorgespannt sind.

6. Kontaktsatz nach einem oder mehreren der vorhergehenden Ansprüche dadurch gekennzeichnet, daß der Massekontakt durch entsprechende Ausbildung seiner Kammer tiefer liegt als die anderen Lesekontakte.

7. Kontaktsatz nach einem oder mehreren der vorhergehenden Ansprüche, dadurch gekennzeichnet, daß der Zusatzkontakt mit seiner Kontaktfläche (52) unterhalb des Massekontaktes angeordnet ist.

8. Kontaktsatz nach einem oder mehreren der vorhergehenden Ansprüche, dadurch gekennzeichnet, daß der Massekontakt eine Anlagefläche (44), gebildet von einem Fortsatz der Kuppe (43) aufweist, die mit einer Anlagefläche (30) eines Stegs (29) zusammenarbeitet.

9. Kontaktsatz nach einem oder mehreren der vorhergehenden Ansprüche, dadurch gekennzeichnet, daß an der Unterseite (21) des Isolierkörpers vorzugsweise einstückig mit diesem ein Haltedom (62) zur Aufnahme und Halterung des Zusatzkontaktes (15) vorgesehen ist.

10. Kontaktsatz nach einem oder mehreren der vorhergehenden Ansprüche, dadurch gekennzeichnet, daß der Zusatzkontakt vorgespannt ist und in seinem vorgespannten Zustand an einer Anlagefläche (80) eines Stegs (29) zur Anlage kommt.

11. Kontaktsatz nach einem oder mehreren der vorhergehenden Ansprüche, dadurch gekennzeichnet, daß die den Karten-Anwesenheitsschalter (40) bildenden Kontakte (14, 15) in Andrückrichtung der Karte gegen die Lesekontakte geschlossen werden.

12. Kontaktsatz nach einem oder mehreren der vorhergehenden Ansprüche, dadurch gekennzeichnet, daß der Massekontakt und/oder der Zusatzkontakt mit einer Sicke mindestens im Kontaktbereich versehen sind, wobei im Falle einer Sicke am Massekontakt und am Zusatzkontakt diese vorzugsweise kreuzweise verlaufen, wobei durch die Sicken ein höherer spezifischer Kontaktdruck erreicht wird, und dadurch eine höhere Kontaktsicherheit, da bei vorhandenen Fremdschichten wie Staub usw., diese durchstoßen werden.

13. Kontaktsatz nach einem oder mehreren der vorhergehenden Ansprüche, dadurch gekennzeichnet, daß der Karten-Anwesenheitsschalter als ein sogenannter Schließer ausgebildet ist.

14. Kontaktsatz nach einem oder mehreren der vorhergehenden Ansprüche, dadurch gekennzeichnet, daß der Karten-Anwesenheitsschalter als ein sogenannter Öffner ausgebildet ist.

15. Kontaktsatz nach einem oder mehreren der vorhergehenden Ansprüche,
dadurch gekennzeichnet, daß die durch eine Vertiefung (71) gebildete Auflagefläche und eine zugehörige Schräge (70) für den Massekontakt (14) in dessen Kammer tiefer gelegt sind, als dies für die Kontaktkammern der "normalen" Lesekontakte der Fall ist, und
daß ein Stegteil (27) und der Gehäuseabschnitt (90) für die Kammer das Massekontakts eine größere Dicke als die Dicke D wie sie für einen "normalen" Lesekontakt vorgesehen ist, haben, so daß die Auflageflächen (91 und 28; Fig. 6) für den Massekontakt tiefer liegen als dies für die normalen Lesekontakte der Fall ist.

## Claims

1. A set of contact elements for use with a SIM-card comprising contact zones, said set comprising:
an insulating body (11) having an upper surface (20) and a bottom surface (21),
a plurality of contact chambers formed in said insulating body,
reading or ground contact elements (12, 13, 14) inserted into said contact chambers and extending with its contact regions beyond the upper surface (20) of the insulating body (11), and
at least one additional or switching contact element (15) located in one of said contact chambers underneath one of said reading contact elements so as to form together therewith a card presence switch (40).

2. The set of contact elements of claim 1 characterized in that the reading contact element adapted for cooperation with said additional contact element is a ground contact element.

3. The set of contact elements of claim 1 or 2 characterized in that said card presence switch (40) is a lagging switch, i. e. which is activated only after the contact zones of the card are contacted or engaged by the reading contact elements and one or more ground contact elements.

4. The set of contact elements according to one of the preceeding claims characterized in that the reading contact elements and the ground contact elements are of identical design.

5. The set of contact elements according to one or more of the preceeding claims characterized in that the reading contact elements and the ground contact element(s) are each biased.

6. The set of contact elements according to one or more of the preceeding claims characterized in that the ground contact element is located elevationally lower than the reading contact elements due to the design of the chamber whithin which said ground contact element is located.

7. The set of contact elements according to one or more of the preceeding claims characterized in that the additional contact element is arranged such that its contact surface (52) is below said ground contact element.

8. The set of contact elements according to one or more of the preceeding claims characterized in that said ground contact element comprises an abutment surface (44) formed by an extension of the contact region or cusp (43), said abutment surface (44) being adapted to cooperate with an abutment surface (30) formed by a web (29).

9. The set of contact elements according to one or more of the preceeding claims characterized in that at the bottom surface (21) of the insulating body, preferably intergrally therewith, a support dome (62) is provided for receiving and supporting the additional contact element (15).

10. The set of contact elements according to one or more of the preceeding claims characterized in that the additional contact element is biased and abuts in its biased condition an abutment surface (80) of a web (29).

11. The set of contact elements according to one or more of the preceeding claims characterized in that the contact elements (14, 15) forming the card presence switch (40) are adapted to be closed in the direction in which the card is pressed against the reading contact elements.

12. The set of contact elements according to one or more of the preceeding claims characterized in that the ground contact element and/or the additional contact element are provided at least in the contact area, with a corrugation,
wherein in the case of a corrugation provided in the ground contact element and a corrugation provided in the additional contact element, said corrugations extend crosswise,
wherein due to said corrugations a higher specific contact pressure is obtained and thus a higher degree of contact safetey inasmuch as layers of foreign matter, for example, dust and the like, which might be present, are pierced during contacting.

13. The set of contact elements according to one or more of the preceeding claims characterized in that said card presence switch is a switch which closes to indicate the presence of a card.

14. The set of contact elements according to one or more of the preceeding claims characterized in that said card presence switch is a switch which opens to indicate the presence of a card.

15. A set of contact elements according to one or more of the preceeding claims characterized in that the support surface formed by a recess (71) together with its respective inclination (70) are located elevationally lower in the chamber for the ground contact element (14), as is the case for the contact chambers of the "regular" reading contacts, and wherein a web portion (27) and the housing section (90) for the chamber of the ground contact element have a larger thickness than thickness D provided for a "regular" reading contact so that the support surfaces (91 and 28 in Fig. 6) for the ground contact element are located elevationally lower, as is the case for the "regular" reading contacts.

## Revendications

1. Ensemble de contacts pour une carte présentant des zones de contact, en particulier une carte SIM, dans lequel sont prévus :
un corps isolant (11) comportant un côté supérieur (20) et un côté inférieur (21),
plusieurs chambres de contact réalisées dans le corps isolant, des contacts de lecture ou de masse (12, 13, 14) introduits dans les chambres de contact, qui font saillie au-dessus du côté supérieur (20) du corps isolant (11) par leurs bossages de contact (43), et
au moins un contact supplémentaire ou de commutation (15), disposé dans au moins une des chambres de contact au-dessous d'un des contacts de lecture en vue de la formation d'un interrupteur de présence de carte (40) avec celui-ci.

2. Ensemble de contacts selon la revendication 1, caractérisé en ce que le contact de lecture coopérant avec le contact supplémentaire est un contact de masse.

3. Ensemble de contacts selon la revendication 1 ou 2, caractérisé en ce que l'interrupteur de présence de carte (40) est réalisé sous la forme d'un interrupteur à retard, c'est-à-dire qui n'est actionné qu'après que les zones de contact de la carte ont été contactées par les contacts de lecture et le ou les contacts de masse.

4. Ensemble de contacts selon l'une des revendications précédentes, caractérisé en ce que les contacts de lecture sont réalisés identiquement au contact de masse.

5. Ensemble de contacts selon l'une ou plusieurs des revendications précédentes, caractérisé en ce que les contacts de lecture et de masse sont respectivement précontraints.

6. Ensemble de contacts selon l'une ou plusieurs des revendications précédentes, caractérisé en ce que le contact de masse est disposé par réalisation correspondante de sa chambre plus profondément que les autres contacts de lecture.

7. Ensemble de contacts selon l'une ou plusieurs des revendications précédentes, caractérisé en ce que le contact supplémentaire est disposé avec sa surface de contact (52) au-dessous du contact de masse.

8. Ensemble de contacts selon l'une ou plusieurs des revendications précédentes, caractérisé en ce que le contact de masse présente une surface d'appui (44), formée par un prolongement du bossage (43), qui coopère avec une surface d'appui (30) d'une traverse (29).

9. Ensemble de contacts selon l'une ou plusieurs des revendications précédentes, caractérisé en ce que sur le côté inférieur (21) du corps isolant de préférence d'une seule pièce avec celui-ci, est prévu un bossage de retenue (62) en vue de la réception et du maintien du contact supplémentaire (15).

10. Ensemble de contacts selon l'une ou plusieurs des revendications précédentes, caractérisé en ce que le contact supplémentaire est précontraint et se trouve dans son état précontraint en contact d'une surface d'appui (80) d'une traverse (29).

11. Ensemble de contacts selon l'une ou plusieurs des revendications précédentes, caractérisé en ce que les contacts (14, 15) formant l'interrupteur de présence de carte (40) sont fermés contre les contacts de lecture dans la direction de pression de la carte.

12. Ensemble de contacts selon l'une ou plusieurs des revendications précédentes, caractérisé en ce que le contact de masse et/ou le contact supplémentaire sont munis d'une moulure au moins dans la zone de contact, dans le cas d'une moulure sur le contact de masse et sur le contact supplémentaire, celles-ci s'étendant de préférence en croix, de telle sorte que grâce aux moulures une pression de contact spécifique accrue est obtenue, ainsi une fiabilité accrue de contact, car dans le cas de la présence de couches étrangères comme de la poussière etc., celles-ci sont éliminées.

13. Ensemble de contacts selon l'une ou plusieurs des revendications précédentes, caractérisé en ce que l'interrupteur de présence de carte est réalisé sous la forme d'un contact travail.

14. Ensemble de contacts selon l'une ou plusieurs des revendications précédentes, caractérisé en ce que l'interrupteur de présence de carte est réalisé sous la forme d'un contact repos.

15. Ensemble de contact selon l'une ou plusieurs des revendications précédentes, caractérisé en ce que la surface d'appui formée par une cavité (71) et une surface inclinée associée (70) pour le contact de masse (14) sont disposées dans la chambre de celui-ci plus profondément que ceci n'est le cas pour les chambres de contact des contacts de lecture "normaux", et
en ce qu'une traverse (27) et le tronçon de boîtier (90) pour la chambre du contact de masse présentent une épaisseur plus grande que l'épaisseur D telle que prévue pour un contact de lecture "normal", de sorte que les surfaces d'appui (91 et 28 ; Figure 6) pour le contact de masse se trouve plus profondément que ceci n'est le cas pour les contacts de lecture normaux.
